Europäisches Patentamt

European Patent Office

Office européen des brevets

(19)

(11) **EP 0 854 617 A1**

(12) **DEMANDE DE BREVET EUROPEEN**

(43) Date de publication:
22.07.1998 Bulletin 1998/30

(51) Int. Cl.⁶: $H04L\ 12/56$, $H04Q\ 11/04$

(21) Numéro de dépôt: 97403183.3

(22) Date de dépôt: 30.12.1997

(84) Etats contractants désignés:
AT BE CH DE DK ES FI FR GB GR IE IT LI LU MC
NL PT SE
Etats d'extension désignés:
AL LT LV MK RO SI

(30) Priorité: 13.01.1997 FR 9700254

(71) Demandeur:
ALCATEL ALSTHOM COMPAGNIE GENERALE
D'ELECTRICITE
75008 Paris (FR)

(72) Inventeurs:
• Huterer, Mario
20052 Monza (MI) (IT)
• Berrouet, Frédéric
64200 Biarritz (FR)

(74) Mandataire:
Fournier, Michel et al
c/o ALCATEL ALSTHOM,
Département de Propriété Industrielle,
30, avenue Kléber
75116 Paris (FR)

(54) **Elément de commutation de cellules ATM mettant en oeuvre des priorités probabilistes attachées aux cellules**

(57) L'invention concerne un élément de commutation comportant une pluralité de ports d'entrée et au moins un port de sortie, un mécanisme de commutation spatiale et une mémoire de cellules dans laquelle sont stockées les cellules, lesdites cellules pouvant être classifiées selon au moins une caractéristique donnée.

Elle se caractérise en ce ledit élément de transmission comporte :

• un moyen pour accéder aux cellules contenues dans ladite mémoire de cellules sélectivement selon ladite caractéristique,
• une mémoire de probabilités associant à chaque valeur possible i de ladite caractéristique une probabilité $p_i$,
• un serveur qui choisit la cellule à émettre parmi celles contenues dans ladite mémoire de cellules en fonction des probabilités ($p_i$) contenues dans la mémoire de probabilités et de la présence ou non d'une cellule dans la mémoire de cellules pour chaque valeur (i) de ladite caractéristique.

FIG.1

EP 0 854 617 A1

**Description**

Le domaine de l'invention est celui des réseaux de télécommunication. Ces réseaux permettent d'acheminer tout type d'information (sons, vidéo, données numériques...) d'un émetteur vers un récepteur, chaque type d'information ayant des caractéristiques et engendrant des contraintes propres.

La présente invention concerne plus précisément un élément de commutation dans un réseau de télécommunication de type temporel asynchrone, et plus particulièrement de type A.T.M. (*Asynchronous Transfer Mode)*, prenant en compte les caractéristiques des communications véhiculées afin de privilégier certaines aux dépens d'autres en fonction de ces caractéristiques.

D'une façon générale, les réseaux de télécommunication peuvent se diviser en deux grandes familles suivant qu'ils mettent en oeuvre des techniques spatiales ou des techniques temporelles.

Les techniques spatiales consistent à affecter un itinéraire physique permanent à chaque voie de communication et donc à répartir spatialement les communications.

Les techniques temporelle peuvent elles-même se subdiviser en deux sous-familles : les techniques temporelles synchrones et les techniques temporelles asynchrones.

Dans le cas des techniques temporelles synchrones, les véhicules de l'information sont des intervalles de temps alloués sur des trames, identifiés pas leur position sur cette trame.

Dans le cas des techniques temporelles asynchrones, les véhicules de la transmission des données sur le réseau sont des paquets qui, dans le cas de l'A.T.M., sont appelés cellules et possèdent une longueur normalisée de 53 octets partagés entre un entête de 5 octets et un champ information, ou conduit A.T.M., de 48 octets.

Bien que le format de base de la cellule soit le même quelque soit la nature des données véhiculées, chacune des connexions a, en fonction de sa nature, des caractéristiques propres en terme de trafic et de qualité de service (QoS pour *Quality of Service* en anglais). Les caractéristiques (incluant le prix, le débit moyen, le débit crête...) de chaque connexion doivent être spécifiées de manière détaillée dans le contrat liant l'utilisateur de la connexion A.T.M. et l'exploitant du réseau qui la lui fournit et sont donc connues du réseau A.T.M.

L'orientation d'une cellule au niveau d'un équipement, par exemple une cellule dans un commutateur, implique la prise en compte d'au moins l'entête de cette cellule par l'équipement afin de déterminer la destination vers laquelle elle doit être aiguillée par l'équipement lui-même. Les différents mécanismes d'aiguillage (commutation spatiale de cellules) sont décrit dans le livre de Martin de Prycker : 〈〈 A.T.M. - Mode de transfert asynchrone 〉〉, paru dans son édition française chez Masson.

De façon classique, les équipements de commutation comprennent une mémoire de type FIFO (*first in, first out* ou, en français, premier entré, premier sorti) destinée à recevoir les cellules ainsi qu'un mécanisme de commutation spatiale.

Au cours de leur transfert dans le réseau, les cellules sont rangées dans ces files d'attente dont le taux de remplissage est fonction de la charge instantanée. Le temps de transit des cellules est donc variable et ce d'une cellule à l'autre pour une communication donnée. Cela induit donc un délai variable entre deux cellules successives d'une même communication ; ce délai est appelé gigue de cellule (ou *cell jitter* en anglais).

Or, pour les trafics dits synchrones, il est essentiel de minimiser la gigue de cellule. Un non-respect de cette contrainte peut amener une 〈〈 famine 〉〉 du récepteur. Il s'agit là, par exemple, du cas des communications téléphoniques, de la vidéotéléphonie, etc.

Une solution connue pour résoudre le problème de la gigue de cellule est décrite dans l'article 〈〈 Services audiovisuels et protocoles associés 〉〉 de Jean-Yves Cochennec et Thierry Houdoin du CNET, paru dans L'écho des Recherches N°44, en 1991.

Connaissant l'excursion maximale de la variation du temps de propagation des cellules dans le réseau, il suffit en effet de différer initialement la restitution de l'information au terminal récepteur d'une valeur égale à cette excursion maximale. Cette excursion maximale est la différence entre le temps de transmission de bout en bout le plus long et le temps de transmission de bout en bout le plus court. Des modélisations existent et permettent de borner ces fluctuations du temps de transmission donc l'excursion maximale de la gigue de cellules. Un tel mécanisme garantit donc, même dans le cas le plus défavorable, l'absence de famine du récepteur.

Cependant, ce mécanisme, s'il résout le problème de la gigue de cellule, induit un retard qui peut être préjudiciable à certains types de trafic, notamment ceux interactifs ou temps-réel.

Certains types de services tels la visioconférence ou la téléphonie vocale classique nécessitent en effet une minimisation de la gigue de cellule et du temps de transmission de bout en bout.

Le but général est de proposer un commutateur de type A.T.M. qui prend en compte les caractéristiques des connexions et les contraintes auxquelles elles sont soumises pour privilégier certaines connexions par rapport à d'autre par un jeu de priorité probabiliste et en fonction de ces caractéristiques.

Une implémentation particulière de la présente invention permet donc de proposer un commutateur de type A.T.M. minimisant simultanément la gigue de cellules et le délai de transmission de bout en bout pour les types de trafic pour lesquels ces contraintes sont critiques aux dépens des types de trafic moins prioritaires.

Une autre implémentation de l'invention permet de proposer un commutateur A.T.M. prenant en compte le prix que paye l'usager pour l'accès au réseau.

Bien que seuls des commutateurs prenant en compte les caractéristiques de prix des connexions et de type de trafic véhiculé par les connexions soient décrits, un commutateur mettant en oeuvre d'autres caractéristiques des connexions entre dans le champ de la présente invention.

Le principe général de l'invention est d'affecter une valeur de probabilité d'émission à chaque valeur de la caractéristique considérée. Cette valeur représente la probabilité selon laquelle le commutateur va envoyer une cellule ayant la caractéristique considérée dans le port de sortie. Ainsi, dans le cas où la caractéristique considérée est le type de trafic véhiculé, on choisira une probabilité plus élevée pour les trafics synchrones que pour les trafics asynchrones de sorte que les trafics synchrones seront statistiquement privilégiés sans pour autant interrompre les autres communications.

Un élément de commutation selon l'invention comporte une pluralité de ports d'entrée et au moins un port de sortie, un mécanisme de commutation spatiale et une mémoire de cellules dans laquelle sont stockées les cellules, lesdites cellules pouvant être classifiées selon au moins une caractéristique donnée ne pouvant prendre qu'un nombre fini de valeur, et il se caractérise en ce qu'il comporte :

• un moyen pour accéder aux cellules contenues dans ladite mémoire de cellules sélectivement selon ladite caractéristique,
• une mémoire de probabilités associant à chaque valeur possible i de ladite caractéristique une probabilité $p_i$,
• un serveur qui choisit la cellule à émettre parmi celles contenues dans ladite mémoire de cellules en fonction des probabilités ($p_i$) contenues dans la mémoire de probabilités et de la présence ou non d'une cellule dans la mémoire de cellules pour chaque valeur (i) de ladite caractéristique.

Comme mentionné précédemment, la caractéristique sur laquelle se fait la classification peut être le type de trafic (voix, vidéo...) ou le tarif de la connexion, mais d'autres caractéristiques peuvent être utilisées tout en restant dans le cadre de l'invention.

En choisissant pour critère le type de trafic, l'invention permettra de minimiser la gigue de cellule et le délai de transmission de bout à bout pour les connexions pour lesquelles ces contraintes sont importantes au détriment des autres connexions.

L'invention, ses caractéristiques et ses avantages apparaîtront de façon plus claire dans la description qui suit en liaison avec les figures évoquées ci-dessous :

La figure 1 représente un schéma général d'un élément de transmission selon l'invention.

La figure 2 est un cas particulier d'élément de transmission donné à titre d'exemple pour éclaircir la description de l'invention.

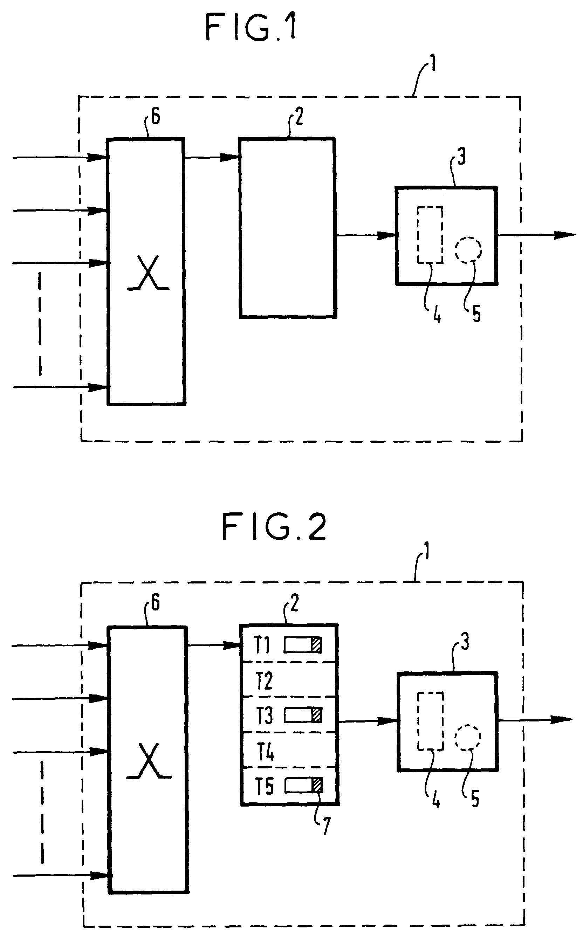

La figure 1 représente un schéma général d'un élément de transmission conforme à l'invention. La logique d'aiguillage (ou commutation spatiale de cellules) n'est pas détaillée dans la mesure où elle fait partie de l'état de la technique accessible à l'homme du métier. Des détails sur les commutateurs pourront, en tout état de cause, être trouvés dans l'ouvrage ⟨⟨ A.T.M. - Mode de transfert asynchrone ⟩⟩ de Martin De Prycker précédemment cité.

La référence 1 représente le commutateur proprement dit. La référence 2 représente une mémoire dans laquelle sont stockées les cellules entrant dans le commutateur 1.

Le serveur 3 possède des moyens lui permettant d'accéder à la première cellule ayant une valeur donnée pour la caractéristique choisie. Par la suite, on appellera classe l'ensemble des cellules contenues dans la mémoire de cellules 2 ayant la même valeur pour la caractéristique choisie.

A chaque unité de temps, le serveur 3 va choisir une classe pour lequel il va émettre une cellule en sortie. Le choix se fait à partir de la mémoire de probabilités 4 qui contient une table de correspondance entre les classes (i) et des probabilités d'émission ($p_i$). Cette table de correspondance peut être établie au moment de l'initialisation du réseau. Les probabilités $p_i$ doivent préférentiellement obéir à l'équation :

$$\sum_{i=1}^{N} p_i = 1$$

où N est le nombre de classes.

Le fonctionnement du serveur est alors le suivant : à chaque instant où le serveur 3 est prêt à émettre une cellule, il peut se trouver face à trois cas :

• La mémoire de cellules 2 est vide. Dans le cas d'un réseau A.T.M., le serveur 3 émet une cellule vide
• Il n'y a des cellules que pour une classe. Dans ce cas, le serveur 3 émet la première cellule contenue dans la mémoire 2 pour cette classe.
• Il y a des cellules présentes dans plusieurs classes.

Dans ce cas, et selon une mise en oeuvre préférentielle mais non limitative du serveur 3, ce-dernier calcule pour chaque classe i pour laquelle il existe au moins une cellule dans la mémoire 2 la probabilité instantanée $p_i'$ avec

$$p'_i = \frac{\alpha_i p_i}{\sum_{j=1}^{N} \alpha_j p_j}$$

où $\alpha_i=1$ s'il existe une cellule de la classe i présente dans la mémoire, et $\alpha_i=0$ sinon. Il s'agit en fait d'une normalisation des probabilités visant à ce que la somme des probabilités instantanées $p_i$' soit égale à 1.

Selon un mode de réalisation préférentiel mais non limitatif du serveur 3, celui-ci comporte un générateur de nombres aléatoires et peut donc choisir un nombre aléatoire r compris entre 0 et 1. En fonction de ce nombre et des probabilités instantanées ($p_i$'), il peut déterminer i par :

$$\sum_{j<i-1} p'_j < r \leq \sum_{j<i} p'_j$$

Selon un mode de réalisation non limitatif de la mémoire 2, celle-ci est constituée d'une pluralité de files d'attente de type FIFO, chacune correspondant à une classe.

Afin de mieux comprendre l'invention, on peut l'étudier au travers d'un exemple concret illustré par la figure 2.

La caractéristique choisie est le type de trafic véhiculé par une cellule. On a donc une classe par type de trafic que peut véhiculer une cellule.

La mémoire de cellules 2 contient 5 classes. Trois d'entre elles (T1, T3 et T5) contiennent au moins une cellule tandis que les deux autres (T2 et T4) sont vides. La mémoire de probabilités 4 contient la table de correspondance entre les classes et les probabilités suivantes :

| Types de trafic i | Probabilités $p_i$ |
|---|---|
| 1 | 0,1 |
| 2 | 0,3 |
| 3 | 0,3 |
| 4 | 0,2 |
| 5 | 0,1 |

Compte tenu de la présence ou non de cellules dans la zone de mémoire correspondant au type de trafic i, on a $\alpha_1=\alpha_3=\alpha_5=1$ et $\alpha_2=\alpha_4=0$ d'où les probabilités instantanées suivantes :

$$p'_1 = \frac{\alpha_1 p_1}{\sum_{j=1}^{5} \alpha_j p_j} = 0,2$$

$$p'_2 = \frac{\alpha_2 p_2}{\sum_{j=1}^{5} \alpha_j p_j} = 0$$

$$p'_3 = \frac{\alpha_3 p_3}{\sum_{j=1}^{5} \alpha_j p_j} = 0,6$$

$$p'_4 = \frac{\alpha_4 p_4}{\sum_{j=1}^{5} \alpha_j p_j} = 0$$

$$p'_5 = \frac{\alpha_5 p_5}{\sum_{j=1}^{5} \alpha_j p_j} = 0,2$$

Le serveur choisit alors un nombre aléatoire r compris entre 0 et 1. Le type de trafic i pour lequel une cellule doit être émise se détermine alors simplement par :

$$i = \begin{cases} 1 & \text{si } r \in [0 \; ; \; 0{,}2[ \\ 3 & \text{si } r \in [0{,}2 \; ; \; 0{,}8[ \\ 5 & \text{si } r \in [0{,}8 \; ; \; 1] \end{cases}$$

**Revendications**

1. Élément de commutation (1) comportant une pluralité de ports d'entrée et au moins un port de sortie, un mécanisme de commutation spatiale (6) et une mémoire de cellules (2) dans laquelle sont stockées les cellules, lesdites cellules pouvant être classifiées selon au moins une caractéristique donnée ne pouvant prendre qu'un nombre fini de valeur, **caractérisé en ce que** ledit élément de transmission (1) comporte :

• un moyen pour accéder aux cellules contenues dans ladite mémoire de cellules (2) sélectivement selon ladite caractéristique,
• une mémoire de probabilités (4) associant à chaque valeur possible i de ladite caractéristique une probabilité $p_i$,
• un serveur (3) qui choisit la cellule à émettre parmi celles contenues dans ladite mémoire de cellules (2) en fonction des probabilités ($p_i$) contenues dans la mémoire de probabilités (4) et de la présence ou non d'une cellule dans la mémoire de cellules (2) pour chaque valeur (i) de ladite caractéristique.

2. Élément de commutation selon la revendication 1 **caractérisé en ce que** le serveur 3 calcule, avant chaque émission de cellule et pour chaque valeur i de ladite caractéristique, la probabilité instantanée $p_i'$ selon l'équation suivante :

$$p'_i = \frac{\alpha_i p_i}{\displaystyle\sum_{j=1}^{N} \alpha_j p_j}$$

où $\alpha_i = 1$ s'il existe une cellule de la classe i présente dans la mémoire, et $\alpha_i = 0$ sinon,

**et en ce que** le choix de la cellule à émettre dépend des probabilités instantanées.

3. Élément de commutation selon la revendication 2 **caractérisé en ce que** ledit serveur 3 comporte un générateur de nombre aléatoire r et **en ce que** le choix de la cellule à émettre dépend de la valeur dudit nombre aléatoire r par la double inégalité suivante :

$$\sum_{j < i-1} p'_j < r \leq \sum_{j < i} p'_j$$

4. Élément de commutation selon l'une quelconque des renvendications 1 à 3 **caractérisé en ce que** ladite mémoire (2) est constituée d'une pluralité de files d'attente de type FIFO, chacune correspondant à une valeur possible de ladite caractéristique.

5. Élément de commutation selon l'une quelconque des revendications 1 à 4 **caractérisé en ce que** ladite caractéristique est le type de trafic véhiculé par ladite cellule.

6. Élément de commutation selon l'une quelconque des revendications 1 à 5 **caractérisé en ce que** ladite caractéristique est la connexion à laquelle ladite cellule appartient.

# FIG.1

# FIG.2

**Office européen des brevets**

# RAPPORT DE RECHERCHE EUROPEENNE

Numéro de la demande

EP 97 40 3183

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP 0 473 330 A (AMERICAN TELEPHONE & TELEGRAPH) 4 mars 1992<br>* colonne 2, ligne 14 - ligne 45 *<br>* colonne 3, ligne 19 - colonne 5, ligne 11 *<br>--- | 1,5,6 | H04L12/56<br>H04Q11/04 |
| Y | US 5 247 677 A (WELLAND ROBERT V ET AL) 21 septembre 1993 | 1,5,6 | |
| A | * colonne 1, ligne 42 - ligne 56 *<br>* colonne 5, ligne 24 - colonne 6, ligne 3 *<br>--- | 2,3 | |
| A | US 5 381 546 A (SERVI LESLIE D ET AL) 10 janvier 1995<br>* colonne 6, ligne 47 - colonne 7, ligne 11 *<br>* colonne 11, ligne 13 - ligne 30 *<br>--- | 1-3 | |
| A | US 5 467 347 A (PETERSEN LARS-GOERAN) 14 novembre 1995<br>* colonne 1, ligne 20 - ligne 31 *<br>* colonne 3, ligne 60 - colonne 4, ligne 45 *<br>----- | 1,4 | |

**DOMAINES TECHNIQUES RECHERCHES (Int.Cl.6)**

H04L

Le présent rapport a été établi pour toutes les revendications

| Lieu de la recherche | Date d'achèvement de la recherche | Examinateur |
|---|---|---|
| LA HAYE | 28 avril 1998 | Gregori, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)